# FASCICULE DE BREVET EUROPEEN

(11) **EP 1 850 065 B1**
(45) Date de publication et mention de la délivrance du brevet: **08.04.2009**
(21) Numéro de dépôt: 07290460.0
(22) Date de dépôt: 13.04.2007
(51) Int. Cl.: F21V 7/08, F21V 8/00, B60Q 1/00, G02B 6/42

(54) **Dispositif de distribution de lumière dans des conduits de lumière**
Vorrichtung zur Lichtverteilung in Lichtleitern
Device for distributing light in light conduits

(30) Priorité: 24.04.2006 FR 0603641
(43) Date de publication de la demande: 31.10.2007
(73) Titulaire: VALEO VISION, 93012 Bobigny Cedex (FR)
(72) Inventeur: Gomez Ruiz, Carlos, 23600 Martos Jaen (ES)
(74) Mandataire: Renous Chan, Véronique

(56) Documents cités:
- WO-A-95/04240
- FR-A1- 2 710 966

## Description

L'invention concerne un dispositif de distribution de lumière dans deux conduits de lumière opposés. Elle vise notamment de tels dispositifs que l'on intègre dans des dispositifs d'éclairage (projecteurs) ou de signalisation (feux) de véhicules automobile.

L'invention concerne plus particulièrement un dispositif de distribution de lumière dans deux conduits de lumière, du type qui comporte un réflecteur de lumière (formant un corps creux) qui est agencé autour d'une source lumineuse et qui est ouvert en avant selon un axe optique (longitudinal), la face (intérieure, c'est-à-dire celle tournée vers l'avant, une fois le dispositif monté dans sa position d'usage, notamment sur le véhicule) du réflecteur comportant :
- une première portion d'ellipsoïde dont le premier foyer est agencé au voisinage de la source lumineuse et le second foyer est agencé à l'extrémité d'entrée d'un premier conduit de lumière, et
- une deuxième portion d'ellipsoïde dont le premier foyer est agencé au voisinage de la source lumineuse et le second foyer est agencé à l'extrémité d'entrée d'un second conduit de lumière, la première portion d'ellipsoïde et la deuxième portion d'ellipsoïde étant de part et d'autre de l'axe optique.

On connaît de nombreuses conceptions de dispositifs de distribution de lumière dans des conduits de lumière, ou conducteurs de lumière, notamment des conceptions comportant un réflecteur dont la face intérieure comporte des portions d'ellipsoïde.

On entend par conduit de lumière un conduit qui est apte à acheminer de la lumière depuis son extrémité d'entrée jusqu'à son extrémité d'entrée, comme une fibre optique ou un guide optique par exemple.

Ainsi, un conduit de lumière permet par exemple d'alimenter en lumière un dispositif d'éclairage ou un feu de signalisation pour véhicule automobile.

Un ellipsoïde est une surface de révolution engendrée par la rotation d'une ellipse autour de son grand axe, globalement comme un ballon de rugby par exemple. Le grand axe de l'ellipsoïde comporte deux foyers.

Grâce aux propriétés optiques de l'ellipsoïde, lorsque la source lumineuse est agencée à un premier foyer d'un réflecteur en forme d'ellipsoïde, les rayons de la source lumineuse qui sont réfléchis par le réflecteur convergent vers le second foyer.

Le document EP-A-1557605 décrit un dispositif de distribution de lumière dans deux conduits de lumière, qui s'appuie sur les propriétés optiques de l'ellipsoïde, pour faire converger les rayons d'une source lumineuse vers deux conduits de lumière, dans le but de concentrer les rayons à l'entrée des conduits de lumière pour perdre le moins de lumière possible, afin d'augmenter le rendement du dispositif.

A cet effet, le dispositif comporte un réflecteur (qui forme un corps creux), à l'intérieur duquel est agencé une source lumineuse qui est agencée sur un axe optique.

La face intérieure réfléchissante du réflecteur comporte une première et une seconde portion d'ellipsoïde qui sont accolées et en vis-à-vis, de manière que le réflecteur comporte une ouverture longitudinale selon l'axe optique.

La première portion d'ellipsoïde comporte un premier foyer qui est agencé au voisinage du centre de la source lumineuse et un second foyer qui est agencé à l'extrémité d'entrée du premier conduit de lumière.

La seconde portion d'ellipsoïde comporte un premier foyer qui est au voisinage du centre de la source lumineuse et un second foyer qui est agencée à l'extrémité d'entrée du second conduit de lumière.

Chacun des seconds foyers de la première et de la seconde portion d'ellipsoïde est agencé sur la face intérieure de la portion d'ellipsoïde opposée.

Les rayons lumineux qui sont réfléchis par la première portion d'ellipsoïde sont renvoyés en direction de la seconde portion d'ellipsoïde opposée, vers l'entrée du premier conduit de lumière et inversement pour la seconde portion d'ellipsoïde du réflecteur.

Ainsi, la source lumineuse du dispositif permet d'alimenter en lumière deux conduits de lumière.

De plus, une partie des rayons lumineux de la source lumineuse du dispositif sont émis vers l'ouverture (longitudinale) pour réaliser une fonction de projecteur.

Cependant, la première portion d'ellipsoïde comporte une partie de surface intérieure inactive qui est agencée dans l'alignement de la source lumineuse et de l'entrée du premier conduit de lumière. De ce fait, ladite partie inactive réfléchit les rayons lumineux vers la source lumineuse.

Ainsi, les rayons lumineux réfléchis par ladite partie inactive sont arrêtés par la source lumineuse et ne peuvent pas atteindre leur objectif, à savoir l'entrée du premier conduit de lumière. Il en va de même pour la seconde portion d'ellipsoïde avec le second conduit de lumière.

De plus, le réflecteur est rogné à son extrémité inférieure, selon un plan horizontal et parallèle à l'axe optique, ce qui entraîne la perte des rayons lumineux qui sont réfléchis vers l'extrémité inférieure.

Dans le but de remédier à ces inconvénients, l'invention propose un dispositif du type décrit précédemment, tel que la face intérieure du réflecteur comporte :
- au moins une troisième portion d'ellipsoïde qui est accolée à la première portion d'ellipsoïde, et dont le premier foyer est agencé au voisinage de la source lumineuse et le second foyer est agencé à l'extrémité d'entrée du second conduit de lumière, et
- au moins une quatrième portion d'ellipsoïde qui est accolée à la deuxième portion d'ellipsoïde, dont le premier foyer est agencé au voisinage de la source lumineuse et dont le second foyer est agencé à l'extrémité d'entrée du premier conduit de lumière.

On comprend par le terme « accolé » le fait que les portions d'ellipsoïde sont en contact mécanique les unes avec les autres, sont même intégrées en un seul composant, ou sont placées côte à côte à très faible distance.

De préférence, la source lumineuse n'est pas sur le chemin de la lumière réfléchie par les portions d'ellipsoïde vers les extrémités d'entrée du premier et du second conduit de lumière.

Selon d'autres caractéristiques de l'invention :
- les quatre portions d'ellipsoïde du réflecteur sont accolées successivement de manière que le réflecteur présente un plan médian de symétrie passant par l'axe optique (longitudinal),
- l'extrémité d'entrée du premier conduit de lumière est globalement affleurante à la deuxième portion d'ellipsoïde de la face intérieure et l'extrémité d'entrée du second conduit de lumière est globalement affleurante à la première portion d'ellipsoïde de la face intérieure,
- les seconds foyers des portions d'ellipsoïde sont agencés en avant par rapport à la source lumineuse selon l'axe optique longitudinal,
- le dispositif comporte un second réflecteur qui est agencé en couronne autour d'une extrémité avant du premier réflecteur selon l'axe optique et qui est une forme de révolution selon l'axe optique,
- les deux conduits de lumière sont raccordés à un appareil d'éclairage, tel qu'un anneau de lumière,
- la face intérieure du réflecteur comporte une cinquième portion d'ellipsoïde qui est accolée à la première portion d'ellipsoïde, dont le premier foyer est agencé au voisinage de la source lumineuse et dont le second foyer est agencé à l'extrémité d'entrée du second conduit de lumière, et une sixième portion d'ellipsoïde qui est accolée à la deuxième portion d'ellipsoïde, le premier foyer est agencé au voisinage de la source lumineuse et dont le second foyer est agencé à l'extrémité d'entrée du premier conduit de lumière, notamment de façon à réduire l'angle d'incidence des rayons lumineux réfléchis par la cinquième et la sixième portion d'ellipsoïde par rapport à l'extrémité d'entrée du premier et du second conduit de lumière.

L'invention concerne aussi tout dispositif d'éclairage (projecteur) ou de signalisation (feu) pour véhicule automobile et intégrant le dispositif décrit plus haut.

D'autres caractéristiques et avantages de l'invention apparaîtront à la lecture de la description détaillée qui suit pour la compréhension de laquelle on se reportera aux dessins annexés dans lesquels :
- la figure 1 est une vue de face du dispositif de distribution de lumière dans deux conduits de lumière selon l'invention, illustrant un réflecteur de lumière comportant des portions d'ellipsoïde ;
- la figure 2 est une vue en coupe longitudinale illustrant le réflecteur de la figure 1 ;
- la figure 3 est une vue partiellement éclatée en perspective d'un dispositif de distribution de lumière conforme aux enseignements de l'invention qui illustre un exemple de réalisation ;
- la figure 4 est une vue similaire à celle de la figure 1 illustrant une variante de réalisation du réflecteur de la figure 1.

Dans la description et les revendications, on utilisera à titre d'exemple non limitatif les expressions telles que supérieur, inférieur, avant, arrière et les orientations longitudinale, vertical et transversal en référence aux trièdres représentés aux figures et aux définitions données dans la description.

De plus, les éléments identiques, similaires ou analogues sont désignés par les mêmes chiffres de référence.

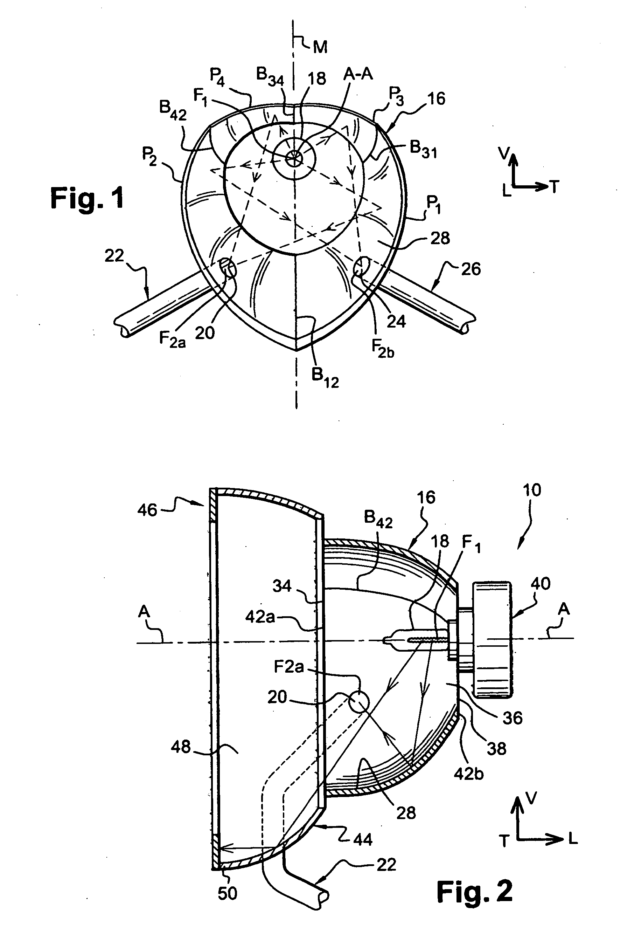

La figure 1 représente un dispositif 10 de distribution de lumière dans un premier 22 et un second 26 conduit de lumière pour un véhicule automobile, qui comporte un réflecteur 16 de lumière.

Le réflecteur 16 de lumière comporte un plan médian M de symétrie vertical longitudinal et est agencé autour d'une source lumineuse 18 qui s'étend sur un axe optique A-A longitudinal.

Le réflecteur 16 forme un corps creux qui comporte une ouverture avant 34 et une ouverture arrière 38 opposée selon l'axe A-A.

Le bord extérieur 42a de l'ouverture avant 34 et le bord extérieur 42b de l'ouverture arrière 38 s'étendent dans un plan globalement vertical transversal.

La lumière émise par la source lumineuse 18 est en majeure partie émise radialement par rapport à l'axe optique A-A. Par conséquent, l'ouverture 38 arrière du réflecteur 16 ne constitue qu'une perte négligeable de lumière.

La source lumineuse 18 est ici une lampe à filament qui s'étend longitudinalement selon l'axe optique A-A.

A titre non limitatif, la source lumineuse 18 peut être par exemple une lampe à xénon ou une diode électroluminescente ou tout autre moyens apte à émettre de la lumière.

Comme on peut le voir à la figure 2, la source lumineuse 18 est raccordée à un bloc d'alimentation 40 qui alimente la source lumineuse 18 en courant électrique.

Le bloc d'alimentation 40 comporte des moyens de fixation (non représentés), telle une griffe, qui fixent et maintiennent en position l'ensemble bloc d'alimentation 40 et source lumineuse 18 sur le réflecteur 16.

Selon un mode de réalisation préféré, la source lumineuse 18 est agencée dans le plan de symétrie médian M, en arrière et verticalement au-dessus de l'extrémité d'entrée 20, 24, de chaque conduit de lumière 22, 26.

Le tronçon d'extrémité libre de chaque conduit de lumière 22, 26 s'étend depuis la face intérieure 28 concave du réflecteur 16, de manière globalement radiale par rapport à l'axe optique A-A.

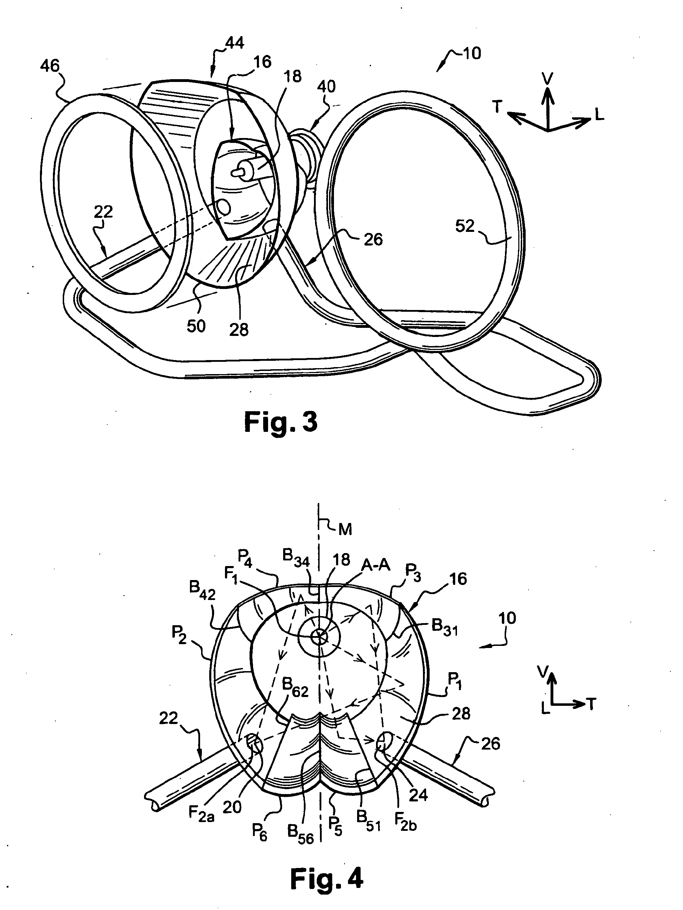

Comme le montre la figure 3, chaque conduit de lumière 22, 26 comporte une pluralité de tronçons coudés de façon à s'étendre jusqu'à un appareil d'éclairage, auquel chaque conduit de lumière 22, 26 est raccordé.

Ainsi, les conduits de lumière 22, 26 permettent d'acheminer la lumière qui pénètre depuis l'extrémité d'entrée 20, 24 des conduits 22, 26 jusqu'à l'appareil d'éclairage.

Sous l'expression appareil d'éclairage, sont par exemple rassemblés, des phares, des feux de signalisation, des éclairages internes et des lampes témoins.

Toutefois, comme on peut le voir à la figure 3, l'appareil d'éclairage est ici un anneau de lumière 52 en matière transparente ou translucide, à l'intérieur duquel la lumière est apte à se propager et qui est apte à remplir une fonction de feu de signalisation.

A titre non limitatif, chaque conduit de lumière 22, 26 peut être raccordé à un ou plusieurs appareils d'éclairage.

Comme on peut le voir à la figure 1, la face intérieure 28 réfléchissante du réflecteur 16 comporte quatre portions P1 , P2, P3, P4 d'ellipsoïde qui sont agencées deux à deux de part et d'autre du plan médian M de symétrie vertical et longitudinal.

Chaque portion P1, P2, P3, P4 d'ellipsoïde comporte un premier foyer F1 coïncidant et commun qui est agencé dans le plan médian M, au centre de la source lumineuse 18.

La première portion P1 et la deuxième portion P2 sont agencées dans une partie inférieure du réflecteur 16, s'étendent en vis-à-vis de part et d'autre du plan M de symétrie et sont accolées par un bord commun inférieur B12 qui s'étend dans le plan de symétrie M.

La première portion P1 d'ellipsoïde comporte un second foyer F2a qui est agencé à l'extrémité d'entrée 20 du premier conduit 22 de lumière.

La deuxième portion P2 d'ellipsoïde comporte un second foyer F2b qui est agencé à l'extrémité d'entrée 24 du second conduit 26 de lumière.

L'extrémité d'entrée 20 du premier conduit 22 de lumière est affleurante à la face intérieure 28 concave de la deuxième portion P2 d'ellipsoïde.

De même, l'extrémité d'entrée 24 du second conduit 26 de lumière est affleurante à la face intérieure 28 concave de la première portion P1 d'ellipsoïde.

La troisième portion P3 et la quatrième portion P4 sont agencées dans une partie supérieure du réflecteur 16, s'étendent de part et d'autre du plan M de symétrie et sont accolées par un bord commun B34 qui s'étend dans le plan de symétrie M.

La troisième portion P3 est accolée à la première portion P1 par un bord commun B31 et comporte un second foyer F2b qui est agencé à l'extrémité d'entrée 24 du second conduit 26 de lumière.

La quatrième portion P4 est accolée à la deuxième portion P2 par un bord commun B42 et comporte un second foyer F2a qui est agencé à l'extrémité d'entrée 20 du premier conduit 22 de lumière.

Ainsi, les premiers foyers F1 des portions d'ellipsoïde P1, P2, P3, P4, sont agencés longitudinalement en arrière et verticalement au-dessus des seconds foyers F2a, F2b, comme le représente la figure 2.

On a représenté par des flèches, aux figures 1 et 2, le trajet de certains rayons lumineux émis par la source lumineuse 18.

Les rayons lumineux réfléchis par la première portion P1 et par la quatrième portion P4 d'ellipsoïde sont réfléchis vers le second foyer F2a des portions P1, P4, à l'extrémité d'entrée 20 du premier conduit de lumière 22.

De même, les rayons lumineux réfléchis par la deuxième portion P2 et la troisième portion P3 d'ellipsoïde sont réfléchis vers le second foyer F2b des portion P2, P3, à l'extrémité d'entrée 24 du second conduit de lumière 26.

L'agencement astucieux des portions d'ellipsoïde du réflecteur 16 permet aux rayons lumineux qui sont réfléchis par les différentes portions P1, P2, P3 P4 d'ellipsoïde de ne pas entrer en contact avec la source lumineuse 18 et de ne pas être arrêtés par cette dernière.

Le dispositif 10 comporte ici un second réflecteur 44 avant annulaire, représenté aux figures 2 et 3, qui est fixé autour de l'extrémité avant du premier réflecteur 16 au moyen d'une griffe (non représentée) par exemple. Le second réflecteur 44 est une forme de révolution selon l'axe longitudinal A-A et est de section décroissante vers l'arrière.

Le second réflecteur 44 permet de réfléchir et de répartir une partie des rayons lumineux qui sont émis par la source lumineuse 18 et qui traversent l'ouverture avant 34 du premier réflecteur 16, vers un anneau de lumière 46, connu de l'état de la technique.

L'anneau de lumière 46, représenté en vue éclatée à la figure 3, est un anneau circulaire moulé en matière plastique transparente ou translucide qui est fixé sur le bord avant extérieur 50 du second réflecteur 44 et qui peut, par exemple, remplir une fonction de feu de signalisation.

Ainsi, un observateur placé à l'avant du réflecteur 16 observe un anneau de lumière 46 produisant un faisceau d'éclairage d'intensité lumineuse sensiblement homogène sur toute la surface de l'anneau 46.

Selon une variante non représentée, le dispositif 10 peut comporter un élément complémentaire, tel qu'un projecteur d'éclairage secondaire, qui est agencé dans la partie centrale vide 48 délimitée par l'anneau de lumière 46 et le second réflecteur 44.

Selon une variante de réalisation représentée à la figure 4, le réflecteur 16 comporte une cinquième portion P5 et une sixième portion P6, qui sont agencées dans une partie inférieure du réflecteur 16.

La cinquième portion P5 et la sixième portion P6 comportent chacune un premier foyer F1 coïncident et commun qui est agencé au voisinage du centre de la source lumineuse 18.

Les deux portions P5, P6 s'étendent de part et d'autre du plan M de symétrie et sont accolées par un bord commun B56 qui s'étend dans le plan de symétrie M.

La cinquième portion P5 est accolée à la première portion P1 par un bord commun B51 et comporte un second foyer F2b qui est agencé à l'extrémité d'entrée 24 du second conduit 26 de lumière.

La sixième portion P6 est accolée à la deuxième partie P2 par un bord commun B62 et comporte un second foyer F2a qui est agencé à l'extrémité d'entrée 20 du premier conduit 22 de lumière.

Ainsi, comme l'illustre les flèches de la figure 4, les rayons lumineux réfléchis par la cinquième portion P5 d'ellipsoïde sont réfléchis vers le second foyer F2b, à l'extrémité d'entrée 24 du second conduit de lumière 26.

De même, les rayons lumineux réfléchis par la sixième portion P6 d'ellipsoïde sont réfléchis vers le second foyer F2a, à l'extrémité d'entrée 20 du premier conduit de lumière 22.

Cette variante de réalisation permet de réduire l'angle d'incidence des rayons lumineux réfléchis par la cinquième P5 et la sixième P6 portion d'ellipsoïde par rapport à l'extrémité d'entrée 20, 24 du premier 22 et du second 26 conduit de lumière.

## Revendications

1. Dispositif (10) de distribution de lumière dans deux conduits (22, 26) de lumière, du type qui comporte une source lumineuse, un premier et un second (22,26) conduits de lumière, et un réflecteur (16) de lumière qui est agencé autour de ladite source lumineuse (18) et qui présente un axe optique (A-A), la face (28) du réflecteur (16) comportant:
- une première portion (P1) d'ellipsoïde dont le premier foyer (F1.) est agencé au voisinage de la source lumineuse (18) et le second foyer (F2a) est agencé à l'extrémité d'entrée (20) d'un premier conduit (22) de lumière, et
- une deuxième portion (P2) d'ellipsoïde dont le premier foyer (F1) est agencé au voisinage de ladite source lumineuse (18) et le second foyer (F2b) est agencé à l'extrémité d'entrée (24) d'un second conduit (26) de lumière, la première portion (P1) d'ellipsoïde et la deuxième portion (P2) d'ellipsoïde étant de part et d'autre de l'axe optique (A-A),
**caractérisé en ce que** ladite face (28) du réflecteur (16) comporte :
- au moins une troisième portion (P3) d'ellipsoïde qui est accolée à la première portion (P1) d'ellipsoïde, et dont le premier foyer (F1) est agencé au voisinage de la source lumineuse (18) et le second foyer (F2b) est agencé à l'extrémité d'entrée (24) du second conduit (26) de lumière, et
- au moins une quatrième portion (P4) d'ellipsoïde qui est accolée à la deuxième portion (P2) d'ellipsoïde, dont le premier foyer (F1) est agencé au voisinage de la source lumineuse (18) et dont le second foyer (F2a) est agencé à l'extrémité d'entrée (20) du premier conduit (22) de lumière.

2. Dispositif (10) selon la revendication précédente, **caractérisé en ce que** la source lumineuse (18) n'est pas sur le chemin de la lumière réfléchie par les portions (P1, P2, P3, P4) d'ellipsoïde vers les extrémités d'entrée (20, 24) du premier (22) et du second (26) conduit de lumière.

3. Dispositif (10) selon l'une des revendications précédentes, **caractérisé en ce que** les quatre portions (P1, P2, P3, P4) d'ellipsoïde du réflecteur (16) sont accolées successivement de manière que le réflecteur (16) présente un plan (M) médian de symétrie passant par l'axe optique (A-A) longitudinal.

4. Dispositif (10) selon l'une quelconque des revendications précédentes, **caractérisé en ce que** l'extrémité d'entrée (20) du premier conduit (22) de lumière est globalement affleurante à la deuxième portion (P2) d'ellipsoïde de la face intérieure (28) et l'extrémité d'entrée (24) du second conduit (26) de lumière est globalement affleurante à la première portion (P1) d'ellipsoïde de la face intérieure (28).

5. Dispositif (10) selon l'une quelconque des _ revendications précédentes, **caractérisé en ce que** les seconds foyers (F2a, F2b) des portions (P1, P2, P3, P4) d'ellipsoïde sont agencés en avant par rapport à la source lumineuse (18) selon l'axe optique (A-A).

6. Dispositif (10) selon l'une quelconque des revendications précédentes, **caractérisé en ce que** le dispositif (10) comporte un second réflecteur (44) qui est agencé en couronne autour d'une extrémité avant du premier réflecteur (16) selon l'axe optique (A-A)

7. Dispositif (10) selon la revendication précédente, **caractérisé en ce que** le second réflecteur (44) présente une forme de révolution selon l'axe optique (A-A).

8. Dispositif (10) selon l'une quelconque des revendications précédentes, **caractérisé en ce que** les deux conduits (22, 26) de lumière sont raccordés à un appareil d'éclairage, tel qu'un anneau de lumière (52).

9. Dispositif (10) selon l'une quelconque des revendications précédentes, **caractérisé en ce que** la face (28) du réflecteur (16) comporte :
- une cinquième portion (P5) d'ellipsoïde qui est accolée à la première portion (P1) d'ellipsoïde, dont le premier foyer (F1) est agencé au voisinage de la source lumineuse (18) et dont le second foyer (F2b) est agencé à l'extrémité d'entrée (24) du second conduit (26) de lumière, et
- une sixième portion (P6) d'ellipsoïde qui est accolée à la deuxième portion (P2) d'ellipsoïde, le premier foyer (F1) est agencé au voisinage de la source lumineuse (18) et dont le second foyer (F2a) est agencé à l'extrémité d'entrée (20) du premier conduit (22) de lumière, notamment de façon à réduire l'angle d'incidence des rayons lumineux réfléchis par la cinquième (P5) et la sixième (P6) portion d'ellipsoïde par rapport à l'extrémité d'entrée (20, 24) du premier (22) et du second (26) conduit de lumière.

10. Dispositif d'éclairage, du type projecteur, ou de signalisation, du type feu, pour véhicule automobile, intégrant un dispositif selon l'une des revendications précédentes.

## Claims

1. Device (10) for distribution of light in two light ducts (22, 26), of the type which comprises a source of light, a first and a second light duct (22, 26) and a light reflector (16) which is arranged around the said source of light (18), and which has an optical axis (A-A), the surface (28) of the reflector (16) comprising:
- a first portion (P1) of ellipsoid, the first focal point (F1) of which is arranged in the vicinity of the source of light (18) and the second focal point (F2a) is arranged at the input end (20) of a first light duct (22); and
- a second portion (P2) of ellipsoid, the first focal point (F1) of which is arranged in the vicinity of the said source of light (18) and the second focal point (F2b) is arranged at the input end (24) of a second light duct (26), the first portion (P1) of ellipsoid and the second portion (P2) of ellipsoid being on both sides of the optical axis (A-A),
**characterised in that** the said surface (28) of the reflector (16) comprises:
- at least one third portion (P3) of ellipsoid which is attached to the first portion (P1) of ellipsoid, and the first focal point (F1) of which is arranged in the vicinity of the source of light (18) and the second focal point (F2b) is arranged at the input end (24) of the second light duct (26); and
- at least one fourth portion (P4) of ellipsoid which is attached to the second portion (P2) of ellipsoid, and the first focal point (F1) of which is arranged in the vicinity of the source of light (18) and the second focal point (F2a) of which is arranged at the input end (20) of the first light duct (22).

2. Device (10) according to the preceding claim, **characterised in that** the source of light (18) is not on the path of the light which is reflected by the portions (P1, P2, P3, P4) of ellipsoid towards the input ends (20, 24) of the first (22) and the second (26) light duct.

3. Device (10) according to one of the preceding claims, **characterised in that** the four portions (P1, P2, P3, P4) of ellipsoid of the reflector (16) are attached in succession such that the reflector (16) has a median plane of symmetry (M) which passes via the longitudinal optical axis (A-A).

4. Device (10) according to any one of the preceding claims, **characterised in that** the input end (20) of the first light duct (22) is globally flush with the second portion (P2) of ellipsoid of the inner surface (28), and the input end (24) of the second light duct (26) is globally flush with the first portion (P1) of ellipsoid of the inner surface (28).

5. Device (10) according to any one of the preceding claims, **characterised in that** the second focal points (F2a, F2b) of the portions (P1, P2, P3, P4) of ellipsoid are arranged at the front in relation to the source of light (18), according to the optical axis (A-A).

6. Device (10) according to any one of the preceding claims, **characterised in that** the device (10) comprises a second reflector (44) which is arranged in a collar around a front end of the first reflector (16), according to the optical axis (A-A).

7. Device (10) according to the preceding claim, **characterised in that** the second reflector (44) has a form of revolution according to the optical axis (A-A).

8. Device (10) according to any one of the preceding claims, **characterised in that** the two light ducts (22, 26) are connected to a lighting device, such as a light ring (52).

9. Device (10) according to any one of the preceding claims, **characterised in that** the surface (28) of the reflector (16) comprises:
- a fifth portion (P5) of ellipsoid which is attached to the first portion (P1) of ellipsoid, the first focal point (F1) of which is arranged in the vicinity of the source of light (18) and the second focal point (F2b) of which is arranged at the input end (24) of the second light duct (26); and
- a sixth portion (P6) of ellipsoid which is attached to the second portion (P2) of ellipsoid, the first focal point (F1) is arranged in the vicinity of the source of light (18) and the second focal point (F2a) of which is arranged at the input end (20) of the first light duct (22), in particular such as to reduce the angle of incidence of the rays of light which are reflected by the first (P5) and the sixth (P6) portions of ellipsoid, relative to the input end (20, 24) of the first (22) and the second (26) light duct.

10. Lighting device of the headlight type, or a signalling device of the light type, for a motor vehicle, incorporating a device according to one of the preceding claims.

## Patentansprüche

1. Vorrichtung (10) zur Lichtverteilung in zwei Lichtleiter (22, 26), vom Typ mit einer Lichtquelle, einem ersten und einem zweiten (22, 26) Lichtleiter und einem Lichtreflektor (16), der um die Lichtquelle (18) herum angeordnet ist und eine optische Achse (A-A) aufweist, wobei die Fläche (28) des Reflektors (16) umfasst:
- einen ersten Ellipsoid-Bereich (P1), dessen erster Brennpunkt (F1) in der Nähe der Lichtquelle (18) angeordnet ist und dessen zweiter Brennpunkt (F2a) am Eintrittsende (20) eines ersten Lichtleiters (22) angeordnet ist, und
- einen zweiten Ellipsoid-Bereich (P2), dessen erster Brennpunkt (F1) in der Nähe der Lichtquelle (18) angeordnet ist und dessen zweiter Brennpunkt (F2b) am Eintrittsende (24) eines zweiten Lichtleiters (26) angeordnet ist, wobei der erste Ellipsoid-Bereich (P1) und der zweite Ellipsoid-Bereich (P2) beidseits der optischen Achse (A-A) liegen,
**dadurch gekennzeichnet, dass** die Fläche (28) des Reflektors (16) umfasst:
- wenigstens einen dritten Ellipsoid-Bereich (P3), der mit dem ersten Ellipsoid-Bereich (P1) verbunden ist und dessen erster Brennpunkt (F1) in der Nähe der Lichtquelle (18) angeordnet ist und dessen zweiter Brennpunkt (F2b) am Eintrittsende (24) des zweiten Lichtleiters (26) angeordnet ist, und
- wenigstens einen vierten Ellipsoid-Bereich (P4), der mit dem zweiten Ellipsoid-Bereich (P2) verbunden ist und dessen erster Brennpunkt (F1) in der Nähe der Lichtquelle (18) angeordnet ist und dessen zweiter Brennpunkt (F2a) am Eintrittsende (20) des ersten Lichtleiters (22) angeordnet ist.

2. Vorrichtung (10) nach dem vorhergehenden Anspruch,
**dadurch gekennzeichnet, dass** die Lichtquelle (18) nicht im Weg des von den Ellipsoid-Bereichen (P1, P2, P3, P4) zu den Eintrittsenden (20, 24) des ersten (22) und des zweiten (26) Lichtleiters reflektierten Lichts liegt.

3. Vorrichtung (10) nach einem der vorhergehenden Ansprüche,
**dadurch gekennzeichnet, dass** die vier Ellipsoid-Bereiche (P1, P2, P3, P4) des Reflektors (16) aufeinanderfolgend so verbunden sind, dass der Reflektor (16) eine durch die optische Längsachse (A-A) verlaufende Symmetrie-Mittelebene (M) aufweist.

4. Vorrichtung (10) nach einem der vorhergehenden Ansprüche,
**dadurch gekennzeichnet, dass** das Eintrittsende (20) des ersten Lichtleiters (22) mit dem zweiten Ellipsoid-Bereich (P2) an der Innenfläche (28) allgemein bündig ist und das Eintrittsende (24) des zweiten Lichtleiters (26) mit dem ersten Ellipsoid-Bereich (P1) an der Innenfläche (28) allgemein bündig ist.

5. Vorrichtung (10) nach einem der vorhergehenden Ansprüche,
**dadurch gekennzeichnet, dass** die zweiten Brennpunkte (F2a, F2b) der Ellipsoid-Bereiche (P1, P2, P3, P4) in Bezug auf die Lichtquelle (18) vor dieser längs der optischen Achse (A-A) angeordnet sind.

6. Vorrichtung (10) nach einem der vorhergehenden Ansprüche,
**dadurch gekennzeichnet, dass** die Vorrichtung (10) einen zweiten Reflektor (44) umfasst, der ringförmig um ein vorderes Ende des ersten Reflektors (16) längs der optischen Achse (A-A) angeordnet ist.

7. Vorrichtung (10) nach dem vorhergehenden Anspruch,
**dadurch gekennzeichnet, dass** der zweite Reflektor (44) längs der optischen Achse (A-A) rotationsförmig ist.

8. Vorrichtung (10) nach einem der vorhergehenden Ansprüche,
**dadurch gekennzeichnet, dass** die beiden Lichtleiter (22, 26) an eine Beleuchtungsvorrichtung angeschlossen sind, zum Beispiel einen Lichtring (52).

9. Vorrichtung (10) nach einem der vorhergehenden Ansprüche,
**dadurch gekennzeichnet, dass** die Fläche (28) des Reflektors (16) umfasst:
- einen mit dem ersten Ellipsoid-Bereich (P1) verbundenen fünften Ellipsoid-Bereich (P5), dessen erster Brennpunkt (F1) in der Nähe der Lichtquelle (18) angeordnet ist und dessen zweiter Brennpunkt (F2b) am Eintrittsende (24) des zweiten Lichtleiters (26) angeordnet ist, und
- einen mit dem zweiten Ellipsoid-Bereich (P2) verbundenen sechsten Ellipsoid-Bereich (P6), dessen erster Brennpunkt (F1) in der Nähe der Lichtquelle (18) angeordnet ist und dessen zweiter Brennpunkt (F2a) am Eintrittsende (20) des ersten Lichtleiters (22) angeordnet ist, insbesondere solchermaßen, dass der Einfallswinkel der von dem fünften (P5) und dem sechsten (P6) Ellipsoid-Bereich reflektierten Lichtstrahlen bezüglich des Eintrittsendes (20, 24) des ersten (22) und des zweiten (26) Lichtleiters reduziert ist.

10. Beleuchtungsvorrichtung vom Typ Scheinwerfer oder Signalgebungsvorrichtung vom Typ Leuchte für Kraftfahrzeuge, umfassend eine Vorrichtung nach einem der vorhergehenden Ansprüche.
